# EUROPÄISCHE PATENTSCHRIFT

(11) **EP 3 194 227 B1**
(45) Veröffentlichungstag und Bekanntmachung des Hinweises auf die Patenterteilung: **27.02.2019**
(21) Anmeldenummer: 15760415.8
(22) Anmeldetag: 27.08.2015
(51) Int. Cl.: B60T 17/02

(54) **VERFAHREN ZUR STEUERUNG EINES DRUCKLUFTSYSTEMS, SOWIE DRUCKLUFTSYSTEM UND FAHRZEUG**
METHOD FOR CONTROLLING A COMPRESSED AIR SYSTEM, AND COMPRESSED AIR SYSTEM AND VEHICLE
PROCÉDÉ DE COMMANDE D'UN SYSTÈME D'AIR COMPRIMÉ AINSI QUE SYSTÈME D'AIR COMPRIMÉ ET VÉHICULE

(30) Priorität: 19.09.2014 DE 102014113597
(43) Veröffentlichungstag der Anmeldung: 26.07.2017
(73) Patentinhaber: KNORR-BREMSE Systeme für Nutzfahrzeuge GmbH, 80809 München (DE)
(72) Erfinder: UDVARDY, Oliver, H-1118 Budapest (HU); BOZSIK, Richard, H-1191 Budapest (HU)
(86) Internationale Anmeldenummer: PCT/EP2015/069581
(87) Internationale Veröffentlichungsnummer: WO 2016/041758

(56) Entgegenhaltungen:
- EP-A1- 2 399 793
- GB-A- 2 335 760
- US-B1- 8 467 950

## Beschreibung

Die vorliegende Erfindung betrifft ein Verfahren zur Steuerung eines Druckluftsystems eines Kraftfahrzeugs, umfassend Verfahrensschritte, wobei ein Kolbenkompressor durch einen Motor des Kraftfahrzeugs angetrieben wird, wobei der Förderzustand des Kolbenkompressors durch eine Förderregelungseinrichtung geregelt wird, und die Förderregelungseinrichtung durch ein Kompressorsteuermodul angesteuert wird, wobei durch den Kolbenkompressor in einer Ladephase Druckluft in einem Druckluftreservoir erzeugt wird. Ferner betrifft die Erfindung ein Druckluftsystem zur Durchführung des Verfahrens und ein Fahrzeug mit einem solchen Druckluftsystem.

Das Einsatzgebiet der Erfindung erstreckt sich auf Kraftfahrzeuge, die ein Druckluftsystem aufweisen, beispielsweise zum Betreiben von Bremsen oder anderen pneumatischen Vorrichtungen. Die Druckluft wird dabei durch einen Kolbenkompressor zur Verfügung gestellt, wobei der Kolbenkompressor üblicherweise ohne Getriebeübersetzung an den Antrieb bzw. den Motor des Fahrzeugs gekoppelt ist, so dass die Drehzahl des Kolbenkompressors der Drehzahl des Motors entspricht. Der Förderzustand kann dabei geregelt werden, indem beispielsweise der Kolbenkompressor vom Motor entkoppelt wird, oder indem beispielsweise der Kolbenhubraum eines oder mehrerer Kolben stark erhöht wird, so dass dort keine Druckluft mit hohem Luftdruck mehr erzeugt wird. In letzterem Fall befindet sich der jeweilige Kolben oder der gesamte Kolbenkompressor im Leerlauf, dreht sich also weiterhin mit der gleichen Drehzahl wie der Motor, verrichtet jedoch kaum Arbeit.

Insbesondere bei kalten Umgebungstemperaturen und wenn der Motor noch nicht warmgelaufen ist, wenn also auch Schmiermittel, welches den Motor und den Kolbenkompressor schmiert, eine geringe Temperatur und somit eine hohe Viskosität aufweist, kann es zu erhöhter mechanischer Belastung beispielsweise der Druckluft erzeugenden Kolben oder Pleuel oder mit diesen zusammenwirkenden Wellen kommen. Insbesondere kann Schmieröl, welches zur Verringerung der Gleitreibung der Kolben des Kolbenkompressors verwendet wird, in den Kolbenhubraum dringen bzw. diffundieren, wodurch Schmieröl in die Druckluftversorgung gelangen kann, wo sie Folgeschäden verursachen kann, inklusive Verunreinigung von Trocknungsmitteln.

Aus der DE 10 2012 009 186 A1 geht ein Verfahren zum Betrieb einer Druckluftbremsanlage eines Kraftfahrzeuges hervor, wobei eine Kompressorsteuerung die Erzeugung von Druckluft regelt, indem in dem Bremssteuergerät auch Berechnungen für die Kompressorsteuerung ausgeführt werden. Nachteilhaft an diesem Verfahren ist, dass keine Möglichkeit gegeben wird, die Last des Kolbenkompressors insbesondere bei tiefen Temperaturen zu verringern Ein weiteres Verfahren zur Steuerung einer Druckluftanlage ist im Dokument US 8 467 950 B1 offenbart.

Es ist die Aufgabe der vorliegenden Erfindung, ein Verfahren zu schaffen, welches unnötige mechanische Belastungen des Kolbenkompressors eines Fahrzeuges verhindert.

Die Aufgabe wird durch ein Verfahren gemäß Anspruch gelöst. Die nachfolgenden abhängigen Ansprüche geben vorteilhafte Weiterbildungen der Erfindung wieder. Die Aufgabe wird ferner gelöst durch ein Druckluftsystem gemäß Anspruch 9 und ein das Druckluftsystem aufweisende Kraftfahrzeug gemäß Anspruch 10..

Die Erfindung schließt die technische Lehre ein, dass mindestens eine Messgröße durch mindestens einen Sensor gemessen wird, und danach die mindestens eine Messgröße mit einem zugeordneten Schwellwert verglichen wird, und bei Überschreiten oder Unterschreiten des Schwellwerts die Förderrate der Druckluft durch Regelung des Kolbenkompressors verringert wird.

Der Vorteil hiervon ist darin zu sehen, dass unnötig große Last auf dem Kolbenkompressor somit verhindert wird. Eine Verringerung der Förderrate der Druckluft bedeutet weniger Belastung der mechanischen Komponenten des Kolbenkompressors.

Als Messgröße wird die Umgebungstemperatur und die Kompressortemperatur gemessen, wobei die Förderrate des Kolbenkompressors verringert wird, wenn die gemessene Temperatur über oder unter einem jeweiligen Temperaturschwellwert liegt.

Der Vorteil ist unter anderem darin zu sehen, dass durch Kenntnis insbesondere der Temperatur des Kolbenkompressors, die durch die weiteren zur Messung vorgesehenen Temperaturen zusätzlich indirekt abgeschätzt werden kann, auf womöglich auftretende hohe mechanische Belastungen und andere durch Kälte verursachte Fehlfunktionen reagiert werden kann. Insbesondere ist in der Kaltstartphase des Kompressors mit erhöhter mechanischer Belastung zu rechnen. Außerdem ist es beispielsweise bei tiefen Temperaturen möglich, dass aufgrund hoher Viskosität des Schmiermittels dessen Schmierungsfunktion nicht ausreichend gewährleistet ist, oder dass ein vergrößerter Spalt zwischen beispielsweise einem Kolben und der ihn umgebenden Kolbenbohrung auftritt, oder dass Materialien, die sich bei schnellem Erwärmen schnell ausdehnen, entsprechend hohen mechanischen Spannungen ausgesetzt sind und brechen. Die Temperaturen können dabei entweder über eine eigens dafür vorgesehene Sensorik oder über im allgemeinen bekannten Stand der Technik bereits üblicherweise vorgesehene Sensoren, die auf einem gemeinsamen Datenbus kommunizieren, erfasst werden.

Auch Fehlfunktionen, die durch eine übermäßige Erhitzung verursacht werden, können so diagnostiziert werden.

Eine vorteilhafte Ausführungsform der Erfindung sieht vor, dass als mindestens eine Messgröße die Drehzahl des Motors und / oder das Drehmoment des Motors und / oder der Druck der Luft innerhalb eines Druckluftreservoirs und / oder die Drehzahl des Kolbenkompressors gemessen wird, wobei die Förderrate des Kolbenkompressors verringert wird, wenn der Messwert über unter einem zugeordneten Schwellwert liegt.

Der Vorteil dieser Ausführungsform ist unter anderem darin zu sehen, dass die den Kompressor beaufschlagende Last, die aufgrund von Reibung und mechanischen Kräften zu Fehlfunktionen und Ausfällen führen kann, durch die gemessenen Parameter erkannt und durch das Senken der Förderrate verhindert wird.

Eine Verbesserung der Erfindung sieht vor, dass als Messwert die Steigung des Kraftfahrzeugs gemessen wird, wobei die Förderrate des Kolbenkompressors verringert wird, wenn die Steigung über unter einem zugeordneten Schwellwert liegt.

Der Vorteil dieser Ausführungsform ist daran zu sehen, dass durch eine Steigung der Straße unter dem Kraftfahrzeug bzw. dadurch resultierend durch eine Steigung des Kraftfahrzeuges selbst, es möglich ist, dass beispielsweise in einem Abfangbecken unter dem Kolbenkompressor aufgefangenes Schmiermittel nicht mehr ablaufen kann, wenn eine für den Ablauf des Schmieröls vorgesehene Öffnung durch die Steigung geometrisch angehoben ist. Sich somit vermehrt in diesem Auffangbecken sammelndes Schmieröl kann somit leichter an den Kolben des Kolbenkompressors in den Hubraum und somit in das Druckluftsystem gelangen. Eine erfindungsgemäße Verringerung der Förderrate von Druckluft, insbesondere der durch die Geometrie der Steigung besonders betroffenen Kolben des Kolbenkompressors, wirkt diesem Effekt entgegen.

Eine weitere vorteilhafte Ausbildungsform der Erfindung sieht vor, dass die Förderrate des Kolbenkompressors verringert wird, indem der Kolbenkompressor von dem Motor entkoppelt wird.

Der Vorteil dieser Ausführungsform ist darin zu sehen, dass durch einfaches Entkoppeln, beispielsweise durch Lösen einer Kupplung zwischen Motor und Kolbenkompressor, die Belastung des Kolbenkompressors schlagartig reduziert werden kann.

Gemäß einem weiteren die Erfindung verbessernden Verfahren wird die Förderrate verringert, in dem wenigstens ein Kolben, bis hin zu allen Kolben, des Kolbenkompressors in Leerlauf geschaltet wird.

Dadurch kann sowohl gezielt lokal auf zu hohe Belastung oder zu geringe Temperaturen reagiert werden, als auch eine minimale Förderrate für Druckluft aufrechterhalten werden. Der Kolbenkompressor kann dadurch auch verbessert beispielsweise in der Kaltstartphase zunächst aufheizen.

Eine weitere Verbesserung des Verfahrens sieht vor, dass die Förderrate verringert wird, indem der Kolbenhub wenigstens eines Kolbens des Kolbenkompressors verringert wird.

Der Vorteil dieser Ausführungsform der Erfindung ist daran zu sehen, dass die Förderrate und insbesondere die Last des Kolbenkompressors somit graduell heruntergefahren werden kann, da ein geringerer Kolbenhub, also ein geringerer zurückgelegter Weg des einzelnen Kolbens zur Komprimierung der Luft im Hubraum, gleichzeitig eine geringere Beaufschlagung durch den darin erzeugten Luftdruck bedeutet.

Eine weitere bevorzugte Ausführungsform der Erfindung sieht vor, dass die Förderrate verringert wird, in dem die Drehzahl des Motors begrenzt wird.

Der Vorteil dieser Ausführungsform ist darin zu sehen, dass durch die Kopplung des Motors an den Kolbenkompressor gleichzeitig die Drehzahl des Kolbenkompressors, und somit die dem Kolbenkompressor belastende Last, beschränkt wird. Außerdem ist eine Drehzahlbegrenzung des Motors typischerweise einfach durch elektronische Regeleinheiten durchzuführen.

Ein die Erfindung betreffendes Druckluftsystem umfasst einen Kolbenkompressor und einen diesen antreibenden Motor, sowie eine elektronische Steuereinheit zur Durchführung des oben genannten Verfahrens.

Ein die Erfindung betreffendes Kraftfahrzeug weist ein solches Druckluftsystem auf.

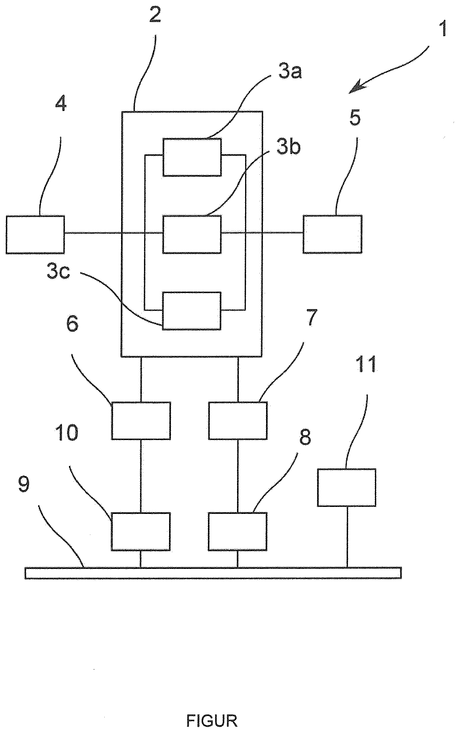

Weitere die Erfindung verbessernde Maßnahmen werden nachstehend gemeinsam mit der Beschreibung eines bevorzugten Ausführungsbeispiels der Erfindung anhand der einzigen Figur näher dargestellt.
- Die Figur: zeigt eine schematische Ansicht eines erfindungsgemäßen Druckluftsystems.

Gemäß Figur umfasst das Druckluftsystem 1 einen Kolbenkompressor 2, welcher einzelne Kolben 3a, 3b, 3c umfasst, welche Luft aus der Umgebung 4 ansaugen und in ein Druckluftreservoir 5 pumpen. Der Kolbenkompressor 2 ist dabei an einen Motor 6 eines Kraftfahrzeuges gekoppelt, so dass der Kolbenkompressor 2 die Drehzahl des Motors 6 aufweist.

Der Förderzustand des Kolbenkompressors 2 wird dabei durch eine Förderregelungseinrichtung 7 geregelt, welche wiederum durch ein Kompressorsteuermodul 8 angesteuert wird. Dieses Kompressorsteuermodul 8 kommuniziert dabei mit einem Datenbus 9. Dieser Datenbus 9 z.B. in Form eines CAN-Busses verbindet dabei verschiedene spezialisierte Systeme des Kraftfahrzeuges. Darunter befinden sich eine Motorsteuereinheit 10 zur Ansteuerung des Motors 6, beispielsweise zur Festlegung einer oberen Drehzahl, und ein Sensor 11 z.B. in Form eines Temperatursensors zur Messung der Temperatur des Kühlmittels des Kolbenkompressors 2.

Wird im Betrieb nun eine zu geringe Temperatur durch den Sensor 11 gemessen, also eine Temperatur unterhalb eines diesen betreffenden Schwellwertes, so kann das Kompressorsteuermodul 8 über den Datenbus 9 eine Anfrage an die Motorsteuereinheit 10 absenden, zur Beschränkung der Drehzahl des Motors 6 und somit des Kolbenkompressors 2. Außerdem kann über das Kompressorsteuermodul 8 und die Förderregelungseinrichtung 7 der Leerlauf eines oder aller Kolben 3a, 3b, 3c und die Verringerung des Hubes eines oder aller dieser Kolben 3a, 3b, 3c veranlasst werden.

Dadurch wird die Last des Kolbenkompressors 2 verringert, beispielsweise bis dieser ausreichend erwärmt wurde.

Die Erfindung ist nicht auf das vorstehend beschriebene bevorzugte Ausführungsbeispiel beschränkt. Es sind vielmehr auch Abwandlungen hiervon denkbar, welche vom Schutzbereich der nachfolgenden Ansprüche mit umfasst sind. So ist es beispielsweise auch möglich, dass der Sensor die Umgebungstemperatur oder die Drehzahl des Motors oder die geometrische Steigung beziehungsweise Neigung des hier nicht weiter dargestellten Kraftfahrzeuges misst. Auch ist es möglich, dass eine lösbare Kupplung zwischen dem Motor und dem Kolbenkompressor angeordnet ist, so dass diese gelöst und der Kolbenkompressor somit entkoppelt werden kann. Ebenfalls ist eine elektronisch geregelte Getriebeübersetzung zwischen Motor und Kolbenkompressor denkbar, zur Reduzierung der Drehzahl des Kolbenkompressors unabhängig von der Drehzahl des Motors.

### Bezugszeichenliste

- 1: Druckluftsystem
- 2: Kolbenkompressor
- 3a, 3b, 3c: Kolben
- 4: Umwelt
- 5: Druckluftreservoir
- 6: Motor
- 7: Förderregelungseinrichtung
- 8: Kompressorsteuermodul
- 9: Datenbus
- 10: Motorsteuereinheit
- 11: Sensor

## Patentansprüche

1. Verfahren zur Steuerung eines Druckluftsystems (1) eines Kraftfahrzeugs, wobei ein Kolbenkompressor (2) durch einen Motor (6) des Kraftfahrzeugs angetrieben wird, wobei
der Förderzustand des Kolbenkompressors (2) durch eine Förderregelungseinrichtung (7) geregelt wird, und
die Förderregelungseinrichtung (7) durch ein Kompressorsteuermodul (8) angesteuert wird, wobei
durch den Kolbenkompressor (2) in einer Ladephase Druckluft in einem Druckluftreservoir (5) erzeugt wird, wobei
mindestens eine Messgröße durch mindestens einen Sensor (11) gemessen wird, und
danach die mindestens eine Messgröße mit einem zugeordneten vorbestimmten Schwellwert verglichen wird, und
bei Überschreiten oder Unterschreiten des Schwellwerts die Förderrate der Druckluft durch Regelung des Kolbenkompressors (2) verringert wird, **dadurch gekennzeichnet, dass** als Messgrößen die Umgebungstemperatur und die Kompressortemperatur gemessen werden, wobei bei Überschreiten und / oder Unterschreiten des zugeordneten Schwellwerts die Förderrate des Kolbenkompressors (2) verringert wird.

2. Verfahren nach Anspruch 1,
**dadurch gekennzeichnet, dass** als mindestens eine Messgröße die Drehzahl des Motors (6) und / oder das Drehmoment des Motors (6) und / oder der Druck der Luft innerhalb eines Druckluftreservoirs (5) und / oder die Drehzahl des Kolbenkompressors (2) gemessen wird, wobei die Förderrate des Kolbenkompressors (2) verringert wird, wenn der Messwert über unter einem zugeordneten Schwellwert liegt.

3. Verfahren nach einem der vorherigen Ansprüche,
**dadurch gekennzeichnet, dass** als Messwert die Steigung des Kraftfahrzeugs gemessen wird, wobei die Förderrate des Kolbenkompressors (2) verringert wird, wenn die Steigung über unter einem zugeordneten Schwellwert liegt.

4. Verfahren nach einem der vorherigen Ansprüche,
**dadurch gekennzeichnet, dass** die Förderrate des Kolbenkompressors (2) verringert wird, indem der Kolbenkompressor (2) von dem Motor entkoppelt wird.

5. Verfahren nach einem der vorherigen Ansprüche,
**dadurch gekennzeichnet, dass** die Förderrate des Kolbenkompressors (2) verringert wird, indem wenigstens ein Kolben (3a; 3b; 3c) des Kolbenkompressors (2) in Leerlauf geschaltet wird.

6. Verfahren nach einem der vorherigen Ansprüche,
**dadurch gekennzeichnet, dass** die Förderrate des Kolbenkompressors (2) verringert wird, indem der Kolbenhub wenigstens eines Kolbens (3a; 3b; 3c) des Kolbenkompressors (2) verringert wird.

7. Verfahren nach einem der vorherigen Ansprüche,
**dadurch gekennzeichnet, dass** die Förderrate des Kolbenkompressors (2) verringert wird, indem die Drehzahl des Motors (6) begrenzt wird.

8. Druckluftsystem (1) eines Kraftfahrzeugs, umfassend einen Kolbenkompressor (2) und einen diesen antreibenden Motor (6),
**dadurch gekennzeichnet, dass** eine Kompressorsteuermodul (8) vorgesehen ist, welches über Rechenanweisungen verfügt, um ein Verfahren nach den Ansprüchen 1 bis 7 durchzuführen.

9. Kraftfahrzeug mit einem Druckluftsystem (1) nach Anspruch 8.

## Claims

1. Method for controlling a compressed air system (1) of a motor vehicle, wherein a piston compressor (2) is driven by a motor (6) of the motor vehicle, wherein
the delivery condition of the piston compressor (2) is regulated by a delivery regulation device (7), and
the delivery regulation device (7) is controlled by a compressor control module (8), in such manner that
during a charging phase compressed air is delivered by the piston compressor (2) into a compressed air reservoir (5), and
at least one measurement variable is measured by at least one sensor (11), and thereafter the at least one measurement variable is compared with an associated predetermined threshold value, and
if the said value is above or below the said threshold value, the delivery rate of compressed air is reduced by regulating the piston compressor (2),
**characterised in that** as measurement variables the ambient temperature and the compressor temperature are measured, and if the value measured is above and/or below the associated threshold value, the delivery rate of the piston compressor (2) is reduced.

2. Method according to Claim 1,
**characterised in that** as the at least one measurement variable the rotation speed of the motor (6) and/or the torque of the motor (6) and/or the pressure of the air in a compressed air reservoir (5) and/or the rotation speed of the piston compressor (2) is measured, and the delivery rate of the piston compressor (2) is reduced if the measured value is above or below an associated threshold value.

3. Method according to either of the preceding claims,
**characterised in that** as a measured value, the inclination of the motor vehicle is measured, and the delivery rate of the piston compressor (2) is reduced if the inclination is greater or less than an associated threshold value.

4. Method according to any of the preceding claims,
**characterised in that** the delivery rate of the piston compressor (2) is reduced by decoupling the piston compressor (2) from the motor (6).

5. Method according to any of the preceding claims,
**characterised in that** the delivery rate of the piston compressor (2) is reduced by switching at least one piston (3a; 3b; 3c) of the piston compressor (2) to idling mode.

6. Method according to any of the preceding claims,
**characterised in that** the delivery rate of the piston compressor (2) is reduced by reducing the piston stroke of at least one piston (3a; 3b; 3c) of the piston compressor (2).

7. Method according to any of the preceding claims,
**characterised in that** the delivery rate of the piston compressor (2) is reduced by limiting the rotation speed of the motor (6).

8. Compressed air system (1) of a motor vehicle, comprising a piston compressor (2) and a motor (6) that drives it,
**characterised in that** a compressor control module (8) is provided, which has algorithms for carrying out a method according to any of Claims 1 to 7.

9. Motor vehicle with a compressed air system (1) according to Claim 8.

## Revendications

1. Procédé de commande d'un système (1) d'air comprimé d'un véhicule automobile, dans lequel on entraîne un compresseur (2) à piston par un moteur (6) du véhicule automobile, dans lequel
on régule l'état de refoulement du compresseur (2) à piston par un dispositif (7) de régulation du refoulement et
on commande le dispositif (7) de régulation du refoulement par un module (8) de commande du compresseur, dans lequel
on produit, par le compresseur (2) à piston, dans une phase de charge de l'air comprimé dans un réservoir (5) d'air comprimé, dans lequel
on mesure au moins une grandeur de mesure par au moins un capteur (11) et
on compare ensuite la au moins une grandeur de mesure à une valeur de seuil associée définie à l'avance et
si l'on est au-dessus ou en dessous de la valeur de seuil, on diminue le taux de refoulement de l'air comprimé, en régulant le compresseur (2) à piston, **caractérisé en ce que** l'on mesure, comme grandeurs de mesure, la température ambiante et la température du compresseur, dans lequel, si l'on passe au-dessus et/ou en dessous de la valeur de seuil associée, on diminue le taux de refoulement du compresseur (2) à piston.

2. Procédé suivant la revendication 1,
**caractérisé en ce que** l'on mesure, comme au moins une grandeur de mesure, la vitesse de rotation du moteur (6) et/ou le couple du moteur (6) et/ou la pression de l'air dans un réservoir (5) d'air comprimé et/ou la vitesse de rotation du compresseur (2) à piston, le taux de refoulement du compresseur (2) à piston étant diminué si la valeur de mesure passe au-dessus ou en dessous d'une valeur de seuil associée.

3. Procédé suivant l'une des revendications précédentes, **caractérisé en ce que** l'on mesure, comme valeur de mesure, la pente du véhicule automobile, le taux de refoulement du compresseur (2) à piston étant diminué, si la pente est supérieure ou inférieure à une valeur de seuil associée.

4. Procédé suivant l'une des revendications précédentes, **caractérisé en ce que** l'on diminue le taux de refoulement du compresseur (2) à piston, en découplant le compresseur (2) à piston du moteur.

5. Procédé suivant l'une des revendications précédentes, **caractérisé en ce que** l'on diminue le taux de refoulement du compresseur (2) à piston, en mettant au moins un piston (3a; 3b; 3c) du compresseur (2) à piston en marche à vide.

6. Procédé suivant l'une des revendications précédentes, **caractérisé en ce que** l'on diminue le taux de refoulement du compresseur (2) à piston, en diminuant la course d'au moins un piston (3a; 3b; 3c) du compresseur (2) à piston.

7. Procédé suivant l'une des revendications précédentes, **caractérisé en ce que** l'on diminue le taux de refoulement du compresseur (2) à piston, en limitant la vitesse de rotation du moteur (6).

8. Système (1) d'air comprimé d'un véhicule automobile, comprenant un compresseur (2) à piston et un moteur (6) entraînant celui-ci,
**caractérisé en ce qu'**il est prévu un module (8) de commande du compresseur, qui dispose d'instructions de calcul pour effectuer un procédé suivant l'une des revendications 1 à 7.

9. Véhicule automobile ayant un système (1) d'air comprimé suivant la revendication 8.
